# EUROPÄISCHE PATENTSCHRIFT

(11) **EP 2 544 907 B1**
(45) Veröffentlichungstag und Bekanntmachung des Hinweises auf die Patenterteilung: **07.05.2014**
(21) Anmeldenummer: 11707802.2
(22) Anmeldetag: 03.03.2011
(51) Int. Cl.: B60H 1/24

(54) **SCHALLDÄMPFUNGSBLENDE FÜR ENTLÜFTUNGSVENTIL**
SOUND DEADENING BAFFLE FOR A VENTILATION VALVE
PANNEAU D'INSONORISATION POUR UNE VANNE DE MISE À L'AIR LIBRE

(30) Priorität: 10.03.2010 DE 102010010927
(43) Veröffentlichungstag der Anmeldung: 16.01.2013
(73) Patentinhaber: TRW Automotive Electronics & Components GmbH, 78315 Radolfzell (DE)
(72) Erfinder: HOFMANN, Jürgen, 67304 Eisenberg (DE); LEIDNER, Vitali, 67677 Enkenbach-Alsenborn (DE)
(74) Vertreter: Prinz & Partner
(86) Internationale Anmeldenummer: PCT/EP2011/001053
(87) Internationale Veröffentlichungsnummer: WO 2011/110306

(56) Entgegenhaltungen:
- FR-A1- 2 691 679
- GB-A- 1 067 863
- US-A- 4 781 106
- US-A1- 2007 184 772

## Beschreibung

Die Erfindung betrifft eine Blende für ein Entlüftungsventil zur Verringerung des Schalleintritts in den Innenraum insbesondere eines Kraftfahrzeugs.

Entlüftungsventile für den Fahrzeuginnenraum sind allgemein bekannt. Sie dienen dazu, die dem Fahrzeuginnenraum durch eine Belüftungs- und/oder Klimaanlage zugeführte Luft nach außen abzuführen. Ein solches Entlüftungsventil weist meist mehrere Rückschlagklappen auf, die es der Luft ermöglichen, aus dem Fahrzeuginnenraum auszutreten, jedoch das unerwünschte Eindringen von Außenluft sowie Verunreinigungen und Wasser verhindern.

Um steigenden Komfortanforderungen gerecht zu werden, wurden bereits verschiedene Versuche unternommen, den unerwünschten Eintritt von Schall durch das Entlüftungsventil in den Fahrzeuginnenraum hinein zu verringern. Bekannt sind Schallschutzhauben, die mit einem schallabsorbierenden Schaum beschichtet sind. Es hat sich jedoch herausgestellt, dass die Wirksamkeit solcher Schallschutzhauben sehr begrenzt ist. Außerdem sind die Schallschutzhauben vergleichsweise teuer, da ihre Herstellung aufwendig ist.

Aus der FR 2 691 679 A1 ist des Weiteren ein Entlüftungsventil bekannt, dass eine Labyrinthgeometrie aufweist. Durch diese Geometrie wird verhindert, dass Schall ungehindert durch das Entlüftungsventil in den Fahrzeuginnenraum dringen kann

Die Aufgabe der Erfindung besteht darin, den unerwünschten Eintritt von Schall in den Fahrzeuginnenraum durch einfache und kostengünstige Maßnahmen im Bereich des Entlüftungsventils zu verringern.

Zur Lösung dieser Aufgabe ist eine Blende für ein Entlüftungsventil zur Verringerung des Schalleintritts in den Innenraum insbesondere eines Kraftfahrzeugs vorgesehen, mit mindestens einem Luftführungskanal, der eine Labyrinthgeometrie aufweist. Erfindungsgemäß sind im Luftführungskanal mindestens zwei Reflexionswände angeordnet, wobei im Luftführungskanal eine mittlere und eine hintere Reflexionswand angeordnet sind. Die Erfindung beruht auf dem Grundgedanken, das Entlüftungsventil mit einem einfach aufgebauten Anbauteil zu versehen, das den Schalleintritt in den Innenraum verhindert oder wenigstens verringert. Die Labyrinthgeometrie des Lüftungskanals führt dazu, dass ein Großteil der Schallwellen reflektiert und wieder nach außen zurückgeworfen wird. Es ist nicht erforderlich, teure Absorptionsmaterialien zu verwenden. Die Labyrinthgeometrie ermöglicht mit geringem Aufwand, die gewünschte Reflexionsgeometrie darzustellen, ohne dass der für den Luftaustausch nötige Strömungsquerschnitt des Luftführungskanals merklich verringert wird. Die auf diese Reflexionswand auftreffenden Schallwellen werden reflektiert und zurückgeworfen, so dass sie nicht in den Fahrzeuginnenraum eintreten können. Die zwei Reflexionswände können insbesondere einander gegenüberliegend angeordnet sein, so dass die Schallschutzwirkung der Blende weiter verbessert ist.

Gemäß einer Ausführungsform ist eine der Reflexionswände als eine einstückig mit dem Boden des Luftführungskanals ausgeführte Verlängerung gebildet. Diese Ausgestaltung zeichnet sich durch einen geringen Herstellungsaufwand aus.

Vorzugsweise ist vorgesehen, dass die Blende eine Montageseite aufweist, die zur Verbindung mit dem Entlüftungsventil vorgesehen ist, und dass eine der Reflexionswände am von der Montageseite abgewandten Ende des Luftführungskanals angeordnet ist und die andere der Reflexionswände etwa in der Mitte des Luftführungskanals angeordnet ist. Auf diese Weise lässt sich ein großer Querschnitt des Luftführungskanals aufrechterhalten, während gleichzeitig eine gute Reflexionswirkung gewährleistet ist.

Gemäß einer alternativen Ausgestaltung ist vorgesehen, dass der Luftführungskanal abgewinkelt verläuft. Diese Ausgestaltung beruht auf der Erkenntnis, dass bereits mit einem abgewinkelten Verlauf eine ausreichende Schallschutzwirkung erzielt werden kann.

Gemäß einer einfachen Ausgestaltung ist vorgesehen, dass der Boden des Luftführungskanals von einer Einlassseite der Blende zunächst ansteigend und anschließend absteigend verläuft. Abgesehen von der Schallschutzwirkung kann mit einer solchen Gestaltung ohne weiteren Aufwand auch ein Schutz gegen den unerwünschten Eintritt von Wasser bewirkt werden.

Vorzugsweise ist vorgesehen, dass der Scheitelpunkt des Bodens sich mindestens auf Höhe des oberen Randes des auslassseitigen Endes des Luftführungskanals befindet. Mit dieser Gestaltung ist ein ausreichender gegenseitiger Versatz der Wände des Luftführungskanals sichergestellt, so dass sich eine sehr gute Schallschutzwirkung ergibt.

Gemäß einer bevorzugten Ausführungsform der Erfindung ist vorgesehen, dass der Luftführungskanal einen Boden aufweist, der so ausgeführt ist, dass eindringendes Wasser nach außen abgeleitet wird. Bei dieser Ausgestaltung übernimmt die Blende zusätzlich die Aufgabe, das unerwünschte Eindringen von Wasser durch das Entlüftungsventil zu verhindern. Auf diese Weise kann ein zusätzlicher Wasserablaufkanal am Entlüftungsventil eingespart werden.

Gemäß einer bevorzugten Ausführungsform der Erfindung ist vorgesehen, dass die Blende mit Montagemitteln zur Anbringung an einem Entlüftungsventil versehen ist. Dies ermöglicht, die Blende mit geringem Aufwand an einem Entlüftungsventil anzubringen, so dass beispielsweise ein und dasselbe Lüftungsventil je nach Anforderungen ohne Blende oder mit Blende ausgeliefert werden kann.

Erfindungsgemäß ist auch eine Baugruppe mit einem Entlüftungsventil und einer Blende der oben genannten Art vorgesehen, wobei der Boden des Luftführungskanals so geneigt ist, dass eintretendes Wasser zur Einlassseite der Blende und aus dieser heraus geleitet wird. Diese Ausführungsform ist dann vorteilhaft, wenn die Blende auf der Außenseite des Entlüftungsventils angeordnet ist; eintretendes Wasser gelangt dann gar nicht erst zum Entlüftungsventil, sondern wird bereits von der Blende abgefangen und wieder nach außen abgeleitet.

Erfindungsgemäß kann bei einer alternativen Baugruppe vorgesehen sein, dass der Boden des Luftführungskanals so geneigt ist, dass Wasser, welches durch das Entlüftungsventil hindurch zur Blende gelangt ist, zum Entlüftungsventil zurück geleitet wird, so dass es durch dieses hindurch abgeführt wird. Diese Ausgestaltung verwendet eine Blende, die auf der Innenseite des Entlüftungsventils angeordnet ist, also zum Fahrzeuginnenraum hin. Wasser, welches durch das Entlüftungsventil hindurch getreten ist, wird bei dieser Ausgestaltung von der Blende abgefangen und wieder zum Entlüftungsventil zurückgeführt. Es kann daher auf separate Maßnahmen zum Abführen von Wasser verzichtet werden.

Vorzugsweise ist vorgesehen, dass die Blende lösbar am Entlüftungsventil angebracht ist. Diese Ausgestaltung ermöglicht zum einen, die Blende mit geringem Aufwand am Entlüftungsventil anzubringen. Zum anderen kann sie je nach den geltenden Anforderungen am Entlüftungsventil nachgerüstet werden.

Die Erfindung wird nachfolgend anhand zweier Ausführungsformen beschrieben, die in den beigefügten Zeichnungen dargestellt sind. In diesen zeigen:
- Figur 1 in einem schematischen Schnitt eine Blende gemäß einer ersten Ausführungsform der Erfindung;
- Figur 2 in einem schematischen Schnitt die Blende von Figur 1, angebracht an einem Entlüftungsventil;
- Figur 3 eine perspektivische Ansicht der in Figur 2 gezeigten Baugruppe; und
- Figur 4 in einer schematischen Schnittansicht eine Blende gemäß einer zweiten Ausführungsform.

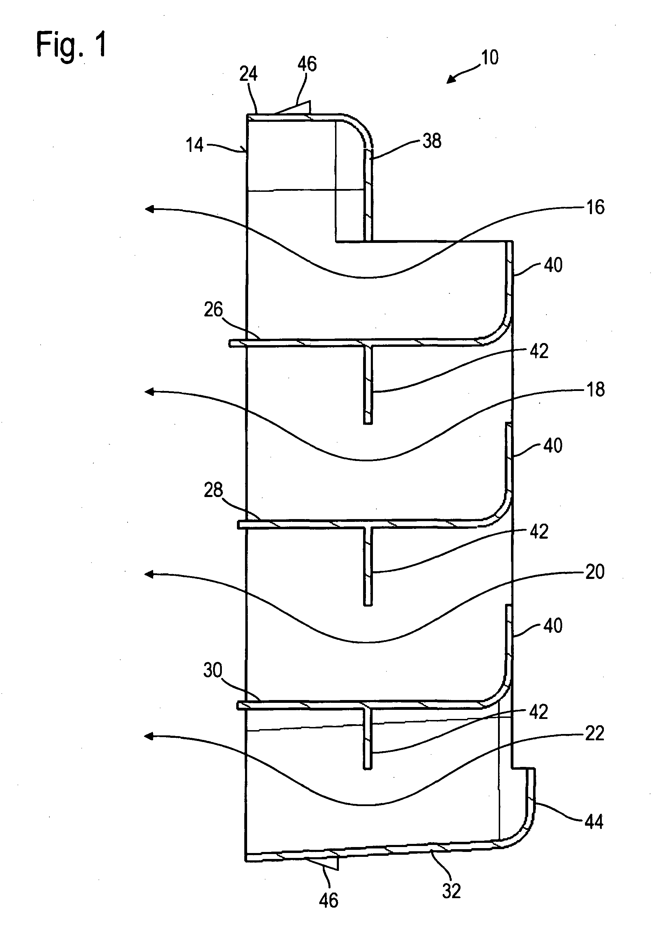

In Figur 1 ist im Schnitt eine Blende 10 gezeigt, die hier als einstückiger, im weitesten Sinne quaderförmiger Körper aus Kunststoff ausgeführt ist. Durch die Blende hindurch erstrecken sich von einer Einlassseite 12 zu einer Auslassseite 14 insgesamt vier Luftführungskanäle 16, 18, 20, 22, angedeutet durch die in Figur 1 gezeigten Strömungspfeile. Der Luftführungskanal 16 ist abgegrenzt zwischen einer oberen Außenwand 24 und einer Zwischenwand 26, die den Boden für den Luftführungskanal 16 sowie die Oberseite für den darunter liegenden Luftführungskanal 18 bildet. Der Luftführungskanal 18 ist an seiner Oberseite durch die Zwischenwand 26 und an seiner Unterseite durch eine weitere Zwischenwand 28 abgegrenzt. Der Luftführungskanal 20 ist wiederum abgegrenzt von der Zwischenwand 28 und einer weiteren Zwischenwand 30. Der Luftführungskanal 22 ist schließlich abgegrenzt von der Zwischenwand 30 und einer unten liegenden Außenwand 32 der Blende 10. Seitlich ist jeder Luftführungskanal 16, 18, 20, 22 durch eine seitliche Außenwand 34, 36 der Blende abgegrenzt.

In jedem Luftführungskanal sind jeweils zwei Reflexionswände angeordnet, die sich senkrecht zu einer gedachten, in Figur 1 horizontal ausgerichteten Längsachse jedes Luftführungskanals erstrecken. Im oberen Luftführungskanal 16 sind eine mittlere Reflexionswand 38 und eine hintere Reflexionswand 40 angeordnet. Die mittlere Reflexionswand 38 ist als einstückige Verlängerung der oberen Außenwand 24 ausgeführt, während die hintere Reflexionswand 40 als sich nach oben erstreckende, einstückige Verlängerung der Zwischenwand 26 ausgeführt ist. Dieselbe Reflexionswand 40 befindet sich in den beiden mittleren Luftführungskanälen 18, 20. Die mittlere Reflexionswand 42 dieser beiden Luftführungskanäle ist gebildet durch einen Steg 42, der senkrecht von der Zwischenwand 26 bzw. 28 nach unten absteht. Eine solche Reflexionswand 42 ist auch für den unteren Luftführungskanal 22 vorgesehen, während die hintere Reflexionswand für den unteren Luftführungskanal 22 gebildet ist durch eine sich nach oben erstreckende Verlängerung 44 der unteren Außenwand 32.

Die in der Mitte jedes Luftführungskanals angeordnete Reflexionswand 38 bzw. 42 endet etwa auf derselben Höhe wie die hintere Reflexionswand 40 bzw. 44 und bildet mit dieser zusammen eine Labyrinthgeometrie. Diese Labyrinthgeometrie verhindert einen geradlinigen Durchtritt eines Luftstroms durch die Blende in einer bezogen auf Figur 1 horizontalen Richtung, sondern erzwingt den durch die Pfeile 16, 18, 20, 22 symbolisierten, gekrümmten Verlauf der Luftströmung.

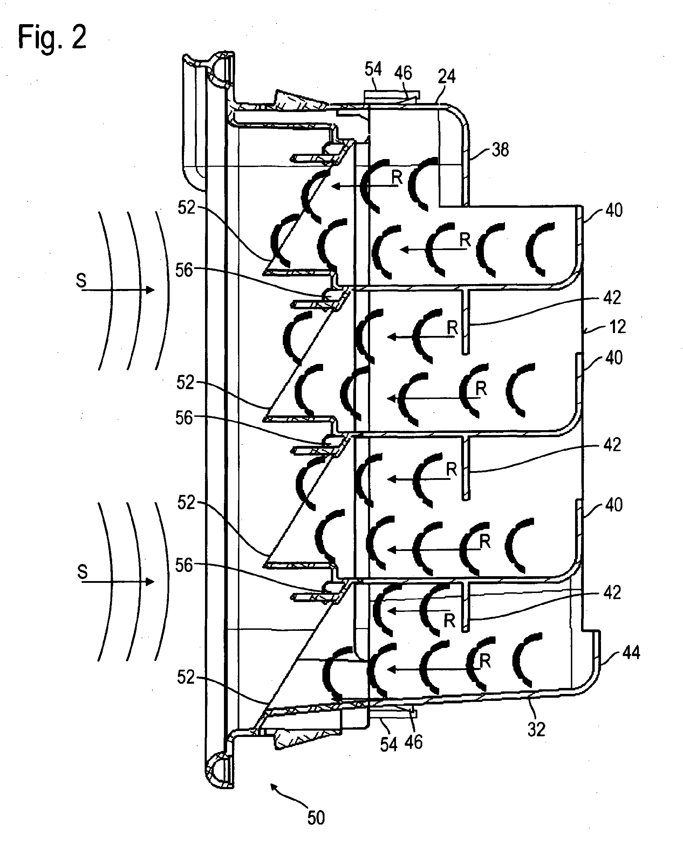

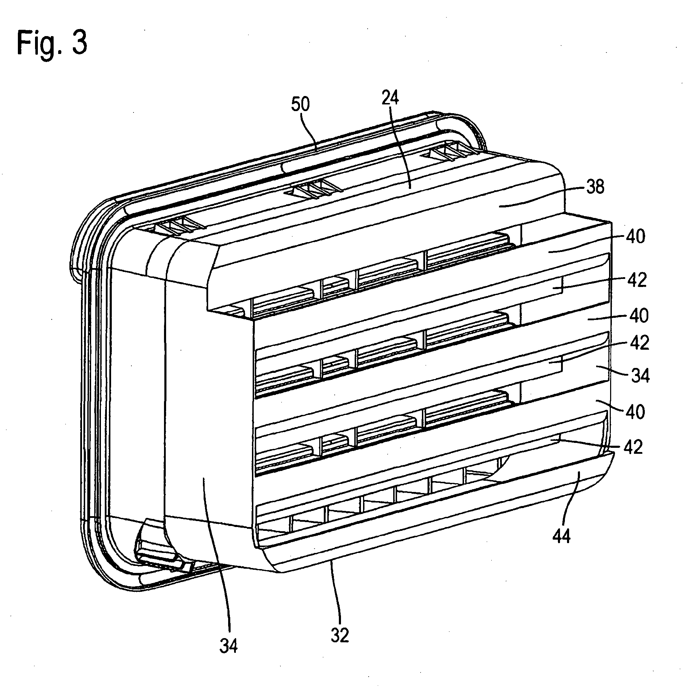

In den Figuren 2 und 3 ist die Blende 10 angebracht an einem Entlüftungsventil 50 gezeigt. Das Entlüftungsventil wird in einer Öffnung einer Fahrzeugstruktur angebracht und weist mehrere hier nur schematisch angedeutete Rückschlagklappen 52 auf, durch die Luft aus dem Fahrzeuginnenraum nach außen entweichen kann. Die Blende 10 ist an die zum Fahrzeuginnenraum weisende Seite des Entlüftungsventils 50 lösbar montiert, beispielsweise mit Schnapphaken 54, die an Rastvorsprüngen 48 der Blende einrasten.

In Figur 2 ist der von außen auf das Entlüftungsventil 50 einwirkende Schall mit den Pfeilen S symbolisiert. Es ist zu sehen, dass der durch die Rückschlagklappen 52 hindurchtretende Schall an den Reflexionswänden 38, 40, 42, 44 reflektiert und zum Außenraum zurückgeworfen wird (siehe die Pfeile R).

Ein vorteilhafter Nebeneffekt der Blende 10 besteht darin, dass sie den Eintritt von Wasser durch das Entlüftungsventil 50 in den Fahrzeuginnenraum verhindert. Aufgrund der Ausgestaltung der Luftführungskanäle wirken spätestens die Reflexionswände 40, 44 als Sammelwand für das Wasser, das durch die Rückschlagklappen 55 hindurchtreten konnte. Dieses Wasser wird von den Zwischenwänden 26, 28, 30 beziehungsweise der unteren Außenwand 32 zurück zum Entlüftungsventil 50 geleitet, wo es entweder durch die den Rückschlagklappen 52 zugeordnete Öffnung direkt oder durch Wasserablaufkanäle 56 zum Außenraum hin abgeleitet wird.

Abweichend von der in den Figuren 1 bis 3 gezeigten Ausführungsform kann die Anordnung der etwa in der Mitte der Luftführungskanäle angeordneten Reflexionswände 38, 42 und der am vom Entlüftungsventil 50 abgewandten Ende angeordneten Reflexionswände 40, 44 auch vertauscht werden, also die mittleren Reflexionswände sich vom Boden des Luftführungskanals nach oben erstrecken und die hinteren Reflexionswände von der Oberseite nach unten erstrecken. Bei dieser Variante bleiben sowohl die Reflexionswirkung als auch die Wasserauffangwirkung erhalten.

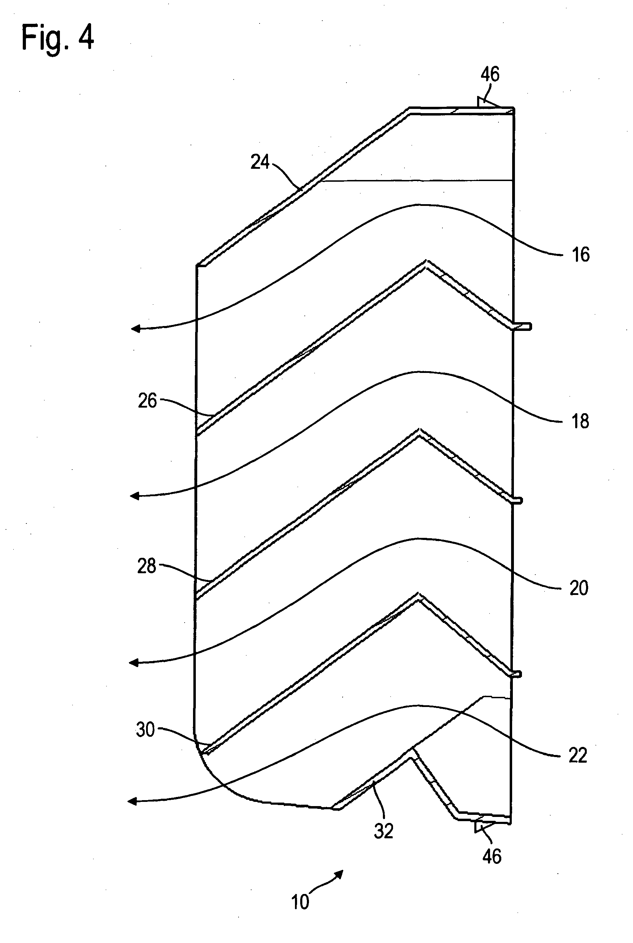

In Figur 4 ist eine zweite Ausführungsform gezeigt, die sich von der ersten Ausführungsform sowohl hinsichtlich der Anordnung der Blende 10 am Entlüftungsventil 50 als auch hinsichtlich der Ausgestaltung der Luftführungskanäle unterscheidet.

Die in Figur 4 gezeigte Blende 10 ist auf der Außenseite des Entlüftungsventils 50 angeordnet, also bezogen auf die Luftströmung vom Innenraum zum Außenraum stromabwärts des Entlüftungsventils. Ein zweiter Unterschied besteht darin, dass keine etwa senkrecht zu einer gedachten Längsachse des Luftführungskanals ausgerichteten Reflexionswände verwendet werden, sondern jeder Luftführungskanal derart gekrümmt bzw. abgewinkelt verläuft, dass die Labyrinthgeometrie durch die obere und die untere Begrenzung der Luftführungskanäle selbst gebildet ist. Zu diesem Zweck ist jede der Zwischenwände 26, 28, 30 abgewinkelt ausgeführt, also mit einer dachähnlichen Form. Entlang der Strömungsrichtung betrachtet steigt jeder Luftführungskanal 16, 18, 20, 22 zunächst an und fällt dann zum auslassseitigen Ende der Blende 10 hin ab. Dabei liegt der Scheitelpunkt der den Boden jedes Luftführungskanals definierenden Zwischenwand 26, 28, 30 bzw. der unteren Außenwand 32 auf einem Niveau, das sich in etwa auf der Höhe des auslassseitigen oberen Randes des entsprechenden Luftführungskanals befindet, welches definiert ist durch die obere Außenwand 24 bzw. die Zwischenwände 26, 28, 30. Auch diese Labyrinthgeometrie verhindert oder verringert, dass Schall von außen durch das Entlüftungsventil 50 in den Fahrzeuginnenraum eindringt. Zusätzlich ist ein Schutz gegen eindringendes Wasser gegeben, da der außenliegende, ansteigende Teil der Luftführungskanäle eindringendes Wasser sofort abfängt und wieder nach außen ableitet, bevor es das Entlüftungsventil 50 erreicht.

Allen Ausführungsformen ist gemeinsam, dass der Querschnitt der Luftführungskanäle durch die Labyrinthgeometrie nicht eingeschränkt ist, sondern in etwa mindestens so groß ist wie der Strömungsquerschnitt, der durch die Rückschlagklappen 52 des Entlüftungsventils 50 zur Verfügung steht. Auf diese Weise ist der Volumendurchsatz des Entlüftungsventils nicht beeinträchtigt.

Die Blende 10 kann abweichend von den dargestellten Ausführungsformen auch mehrteilig ausgeführt sein, beispielsweise um sie einfacher herstellen zu können. Grundsätzlich ist es auch möglich, die Blenden einstückig mit dem Entlüftungsventil auszuführen. Bevorzugt sind die Blenden jedoch so ausgestaltet, dass sie als Anbauteil am entsprechenden Entlüftungsventil angebracht werden können.

## Patentansprüche

1. Blende (10) für ein Entlüftungsventil zur Verringerung des Schalleintritts in den Innenraum insbesondere eines Kraftfahrzeugs, mit mindestens einem Luftführungskanal (16, 18, 20, 22), der eine Labyrinthgeometrie aufweist, **dadurch gekennzeichnet, dass** im Luftführungskanal (16, 18, 20, 22) mindestens zwei Reflexionswände (38, 40, 42, 44) angeordnet sind, wobei im Luftführungskanal eine mittlere Reflexionswand (38, 42) und eine hintere Reflexionswand (40) angeordnet sind.

2. Blende (10) nach Anspruch 1, **dadurch gekennzeichnet, dass** eine der Reflexionswände (40, 42) durch eine einstückig mit dem Boden des Luftführungskanals ausgeführte Verlängerung gebildet ist.

3. Blende (10) nach Anspruch 1 oder Anspruch 2, **dadurch gekennzeichnet, dass** sie eine Montageseite aufweist, die zur Verbindung mit dem Entlüftungsventil vorgesehen ist, und dass eine der Reflexionswände (40, 44) am von der Montageseite abgewandten Ende des Luftführungskanals (16, 18, 20, 22) angeordnet ist und die andere der Reflexionswände (38, 42) etwa in der Mitte des Luftführungskanals angeordnet ist.

4. Blende (10) nach Anspruch 1, **dadurch gekennzeichnet, dass** der Luftführungskanal (16, 18, 20, 22) abgewinkelt verläuft.

5. Blende (10) nach Anspruch 4, **dadurch gekennzeichnet, dass** der Boden des Luftführungskanals (16, 18, 20, 22) von einer Einlassseite zunächst ansteigend und anschließend absteigend verläuft.

6. Blende (10) nach Anspruch 5, **dadurch gekennzeichnet, dass** der Scheitelpunkt des Bodens (26, 28, 30, 32) sich mindestens auf Höhe des oberen Randes des auslassseitigen Endes des Luftführungskanals befindet.

7. Blende (10) nach einem der vorhergehenden Ansprüche, **dadurch gekennzeichnet, dass** der Luftführungskanal (16, 18, 20, 22) einen Boden aufweist, der so ausgeführt ist, dass eindringendes Wasser nach außen abgeleitet wird.

8. Blende (10) nach einem der vorhergehenden Ansprüche, **dadurch gekennzeichnet, dass** sie mit Montagemitteln (46) zur Anbringung an einem Entlüftungsventil versehen ist.

9. Baugruppe mit einem Entlüftungsventil (50) und einer Blende (10) nach einem der vorhergehenden Ansprüche, **dadurch gekennzeichnet, dass** der Boden (26, 28, 30, 32) des Luftführungskanals (16, 18, 20, 22) so geneigt ist, dass eintretendes Wasser zur Einlassseite der Blende (10) und aus dieser heraus geleitet wird.

10. Baugruppe mit einem Entlüftungsventil (50) und einer Blende nach einem der vorhergehenden Ansprüche, **dadurch gekennzeichnet, dass** der Boden (26, 28, 30, 32) des Luftführungskanals so geneigt ist, dass Wasser, welches durch das Entlüftungsventil (50) hindurch zur Blende (10) gelangt ist, zum Entlüftungsventil (50) zurück geleitet wird, so dass es durch dieses hindurch abgeführt wird.

11. Baugruppe nach einem der Ansprüche 9 und 10, **dadurch gekennzeichnet, dass** die Blende (10) lösbar am Entlüftungsventil (50) angebracht ist.

## Claims

1. A baffle (10) for a venting valve for reducing the sound admission into the interior in particular of a motor vehicle, including at least one air guiding channel (16, 18, 20, 22) having a labyrinth geometry, **characterized in that** at least two reflection walls (38, 40, 42, 44) are arranged in the air guiding channel (16, 18, 20, 22), a center reflection wall (38, 42) and a rear reflection wall (40) being arranged in the air guiding channel.

2. The baffle (10) according to claim 1, **characterized in that** one of the reflection walls (40, 42) is realized by an extension formed in one piece with the bottom of the air guiding channel.

3. The baffle (10) according to claim 1 or claim 2, **characterized in that** it has a mounting side provided for the connection with the venting valve, and **in that** one of the reflection walls (40, 44) is arranged at the end of the air guiding channel (16, 18, 20, 22) facing away from the mounting side, and the other of the reflection walls (38, 42) is arranged approximately in the middle of the air guiding channel.

4. The baffle (10) according to claim 1, **characterized in that** the air guiding channel (16, 18, 20, 22) extends in an angled manner.

5. The baffle (10) according to claim 4, **characterized in that** the bottom of the air guiding channel (16, 18, 20, 22) extends from an inlet side first so as to be ascending and then descending.

6. The baffle (10) according to claim 5, **characterized in that** the vertex of the bottom (26, 28, 30, 32) is arranged at least at the level of the upper edge of the outlet-side end of the air guiding channel.

7. The baffle (10) according to any of the preceding claims, **characterized in that** the air guiding channel (16, 18, 20, 22) has a bottom configured such that penetrating water is guided to the outside.

8. The baffle (10) according to any of the preceding claims, **characterized in that** it is provided with mounting means (46) for the attachment to a venting valve.

9. An assembly including a venting valve (50) and a baffle (10) according to any of the preceding claims, **characterized in that** the bottom (26, 28, 30, 32) of the air guiding channel (16, 18, 20, 22) is inclined such that penetrating water is guided to the inlet side of the baffle (10) and out of the latter.

10. An assembly including a venting valve (50) and a baffle according to any of the preceding claims, **characterized in that** the bottom (26, 28, 30, 32) of the air guiding channel is inclined such that water having reached the baffle (10) through the venting valve (50) is guided back to the venting valve (50) so that it is conducted away through the latter.

11. The assembly according to any of claims 9 and 10, **characterized in that** the baffle (10) is releasably mounted to the venting valve (50).

## Revendications

1. Ecran (10) pour valve de purge d'air pour la réduction de l'entrée de son dans un intérieur en particulier d'un véhicule automobile, comportant au moins un canal de guidage d'air (16, 18, 20, 22) qui présente une géométrie en labyrinthe, **caractérisé en ce qu'**au moins deux parois de réflexion (38, 40, 42, 44) sont agencées dans le canal de guidage d'air (16, 18, 20, 22), une paroi de réflexion centrale (38, 42) et une paroi de réflexion arrière (40) étant agencées dans le canal de guidage d'air.

2. Ecran (10) selon la revendication 1, **caractérisé en ce que** l'une des parois de réflexion (40, 42) est formée par un prolongement réalisé d'un seul tenant avec le fond du canal de guidage d'air.

3. Ecran (10) selon la revendication 1 ou la revendication 2, **caractérisé en ce qu'**il présente un côté de montage prévu pour le raccordement à la valve de purge d'air, et **en ce que** l'une des parois de réflexion (40, 44) est agencée à l'extrémité du canal de guidage d'air (16, 18, 20, 22) détournée du côté de montage et l'autre des parois de réflexion (38, 42) est agencée environ au centre du canal de guidage d'air.

4. Ecran (10) selon la revendication 1, **caractérisé en ce que** le canal de guidage d'air (16, 18, 20, 22) s'étend de manière coudée.

5. Ecran (10) selon la revendication 4, **caractérisé en ce que** le fond du canal de guidage d'air (16, 18, 20, 22) s'étend depuis un côté d'admission tout d'abord en montant et ensuite en descendant.

6. Ecran (10) selon la revendication 5, **caractérisé en ce que** le sommet du fond (26, 28, 30, 32) se trouve au moins à hauteur du bord supérieur de l'extrémité côté sortie du canal de guidage d'air.

7. Ecran (10) selon l'une des revendications précédentes, **caractérisé en ce que** le canal de guidage d'air (16, 18, 20, 22) présente un fond qui est réalisé de manière à ce que de l'eau qui s'infiltre est évacuée vers l'extérieur.

8. Ecran (10) selon l'une des revendications précédentes, **caractérisé en ce qu'**il est pourvu de moyens de montage (46) pour le montage sur une valve de purge d'air.

9. Ensemble comportant une valve de purge d'air (50) et un écran (10) selon l'une des revendications précédentes, **caractérisé en ce que** le fond (26, 28, 30, 32) du canal de guidage d'air (16, 18, 20, 22) est incliné de telle sorte que de l'eau qui s'infiltre est guidée vers le côté d'admission de l'écran (10) et hors de celui-ci.

10. Ensemble comportant une valve de purge d'air (50) et un écran selon l'une des revendications précédentes, **caractérisé en ce que** le fond (26, 28, 30, 32) du canal de guidage d'air est incliné de telle sorte que de l'eau qui est parvenue à l'écran (10) au travers de la valve de purge d'air (50) est reguidée vers la valve de purge d'air (50) de sorte qu'elle est évacuée à travers celle-ci.

11. Ensemble selon l'une des revendications 9 et 10, **caractérisé en ce que** l'écran (10) est monté de manière détachable sur la valve de purge d'air (50).
